# EUROPEAN PATENT SPECIFICATION

(11) **EP 1 111 317 B1**
(45) Date of publication and mention of the grant of the patent: **18.02.2004**
(21) Application number: 99204432.1
(22) Date of filing: 21.12.1999
(51) Int. Cl.: F25D 11/02, F25D 17/06

(54) **Refrigerator**
Kühlschrank
Réfrigérateur

(43) Date of publication of application: 27.06.2001
(73) Proprietor: A/S Vestfrost, 6705 Esbjerg O (DK)
(72) Inventor: Sallo, Eivind, 6715 Esbjerg N (DK)
(74) Representative: Elmeros, Claus

(56) References cited:
- EP-A- 0 845 643
- EP-A- 0 990 862
- WO-A-99/42771
- DE-A- 19 827 038
- DE-B- 1 035 671
- US-A- 2 912 834
- PATENT ABSTRACTS OF JAPAN vol. 1999, no. 02, 26 February 1999 (1999-02-26) -& JP 10 311645 A (MATSUSHITA REFRIG CO LTD), 24 November 1998 (1998-11-24)
- PATENT ABSTRACTS OF JAPAN vol. 1999, no. 03, 31 March 1999 (1999-03-31) -& JP 10 318645 A (TOSHIBA CORP), 4 December 1998 (1998-12-04)

## Description

The present invention relates to a refrigeration apparatus according to claim 1. A similar refrigerating apparatus of such kind is known from DE-1 035 671.

The so-called two-temperature refrigerators are well known. This type of refrigerator has two main compartments with different temperatures and is provided with separate access doors.

One of the compartments is usually kept at a rating temperature of about 5°C for preservation of fresh food, cold drinks and the like, whilst the other compartment is kept at a rating temperature of about minus 18°C for preservation of frozen foodstuff.

Refrigerators of this kind may be provided with separate refrigerating circuits for the different compartments. However, the energy consumption of this type of refrigerators is high due to the presence of a compressor for each of the refrigerating circuits.

The refrigerators may also comprise a single refrigerating circuit having a single compressor and relevant static cooled evaporators hydraulically connected through valves according to the various operative conditions. An example of such type of refrigerator is known from WO-A-99/42771. The operating conditions of these valves often damage the function of the valves whereby the refrigerator may damage the stored food and will consume an extraordinary amount of energy due to valve malfunctions.

Both the above-mentioned solutions are complicated and costly to produce.

It is preferable to utilise one single compressor refrigerating circuit wherein the different storage compartments are connected directly, and usually in series, without the provision of any valves. Examples of such refrigerators are e.g. known from DE-A-1 035 671.

In refrigerators of this type, the operating temperatures are determined by on/off cycles of the compressor and are usually controlled by a single adjustable thermostatic device capable of reading the temperature of the evaporator associated with the fresh food storage compartment and possibly the temperature of the air inside the fresh food storage compartment. The temperature inside the compartments depends on the duty cycle of the compressor, the general size of the compartments, the loading conditions and the environmental temperature. The refrigerators and/or freezers of this type are limited to a relative narrow operating range and are suitable only for limited usage conditions.

So-called frost free refrigerators-freezers are also known in the art. This type utilises a single compressor and a single fan cooled evaporator to cool both the storage and the freezing compartments by diverting part of the air flow from the freezer evaporator to the fresh food storage compartment and back to the freezer evaporator. This diversion is controlled by means of a thermostatic or manual damper device. An example of this type of refrigeration is known from EP-A-0 845 643.

Refrigerator-freezers of this type are relatively energy consuming. A substantial air flow is required to maintain both compartments at the desired temperatures. Humidity from both compartments accumulates on the evaporator as frost which requires frequent defrosting, usually initiated by a timing device on a daily basis. The electric energy and the associated heat required to operate the fan and the defrost arrangement make these refrigerators inherently inefficient and costly to operate.

It is the object for the present invention to provide individual temperature control in a refrigerating apparatus of the initially mentioned kind such that the refrigerating apparatus can be operated in an energy efficient way.

This object is achieved by a refrigerating apparatus according to claim 1.

The evaporators cool the surrounding air e.g. to a freezing temperature. In order to keep the temperature in the first compartment somewhat higher than in the second compartment, the cool air from the enclosure is drawn into the first compartment by ventilation means on demand. This operation is controlled by temperature control means. Hereby, an independent temperature control of the first compartment can be achieved by a single-compressor refrigerating circuit, as the cycles of ventilation can be regulated in order to maintain the desired temperature. Moreover, a refrigerator according to the invention is energy efficient, as only a single compressor is used and as no high energy consuming components are required for the ventilation means and the temperature control means in order to achieve the desired flows of air between the enclosure and the first compartment.

A refrigeration apparatus according to the invention has a concealed evaporator for the fresh food compartment. This is advantageous as the risk of the evaporator being damaged and possibly leaking is eliminated. This is of particular importance as isobutane is commonly used as a coolant instead of a CFC gas today. Isobutane is an ignitable and explosive fluid, and a leak in the evaporator in a refrigerator could therefore have a quite damaging effect.

The ventilation means comprises a fan and an opening and the temperature control means comprises a thermostat. The fan leads cool air into the first compartment when the thermostat senses a temperature below a predetermined level. The fan circulates cool air into the first compartment in a controlled manner to create an even temperature from top to bottom in the compartment. By the opening, warmer air from the first compartment is lead into the enclosure for recooling.

The fan is arranged in the upper part and the opening in the lower part of the first compartment, and the thermostat senses the outgoing air from the first evaporator in the enclosure. Hereby, a natural flow of air inside the first compartment is achieved, since cool air is drawn in at the top and sinks towards the bottom as it blends with the already existing air in the compartment. This means that very limited fan capacity is required which contributes to a further reduction in the energy consumption required to operate the temperature control system further.

The fan is preferably a small fan that can be operated by a signal switch of the thermostat and powered by a small electric current. Hereby, a low energy consuming electric control system is achieved.

The fan is preferably of a direct current permanent magnet type. Hereby, a simple and reliable temperature control system suitable for operating the fan is achieved, as such type of fan only required a small amount of energy, e.g. as little as 0,6 watts,

The second compartment is provided with a second thermostat comprising a first sensor registering the air temperature inside the second compartment and controlling the compressor of the single-compressor refrigerating circuit. The second thermostat can be of an electronic type with a minimum difference between cut in and cut out temperatures. Hereby, the thermostat controls the on/off cycling of the compressor in order to regulate the operating temperature of the second compartment.

The second thermostat comprises a second sensor for registering the temperature on the surface of the first evaporator in the enclosure. In addition, the second thermostat is programmed to stop the compressor at predetermined intervals to ensure defrosting in the enclosure in connection with the first compartment. The enclosure is provided with defrost water collecting means for draining the defrost water to the outside of the cabinet. Hereby, an automatic defrosting function can be achieved. The defrost water drained from the enclosure can be collected outside the cabinet where e.g. a pan on top of the compressor utilises the compressor heat to make the defrost water evaporate.

In a particularly advantageous embodiment of the invention, the compressor is a variable speed compressor. Hereby, the compressor can be operated at near 100 % duty time in a low energy-consuming mode, removing the need for repetitive start energy supplies for restarting the compressor and rebuilding of the operating pressure in the refrigerating circuit.

The evaporators are arranged in series. This provides a particular simple and efficient cooling method of a refrigerating system for multi-temperature refrigerating apparatuses.

By the invention, the first compartment is preferably kept at a temperature suitable for preservation of fresh food and the like, such as a rating temperature of about 5 °C, and the second compartment is kept at a lower temperature suitable for preservation of frozen foodstuff, such as a rating temperature well below 0°C, preferably minus 18°C.

A preferred embodiment of the invention is described in detail in the following with reference to the accompanying drawings, in which
- figure 1: shows a schematic view of a preferred embodiment of the refrigerating apparatus according to the invention, and

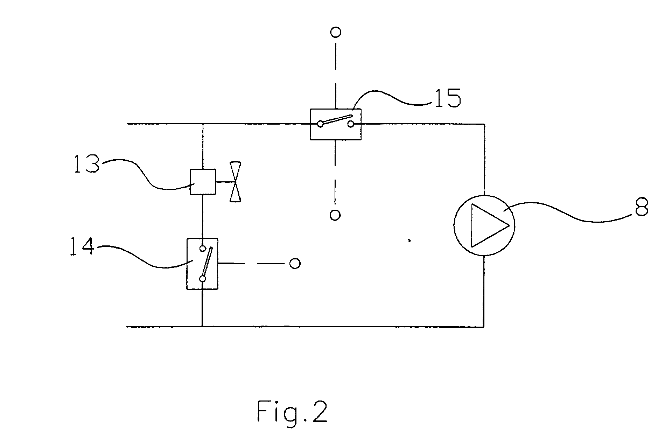

- figure 2: shows an electric circuit for controlling the operation of the apparatus as shown in figure 1.

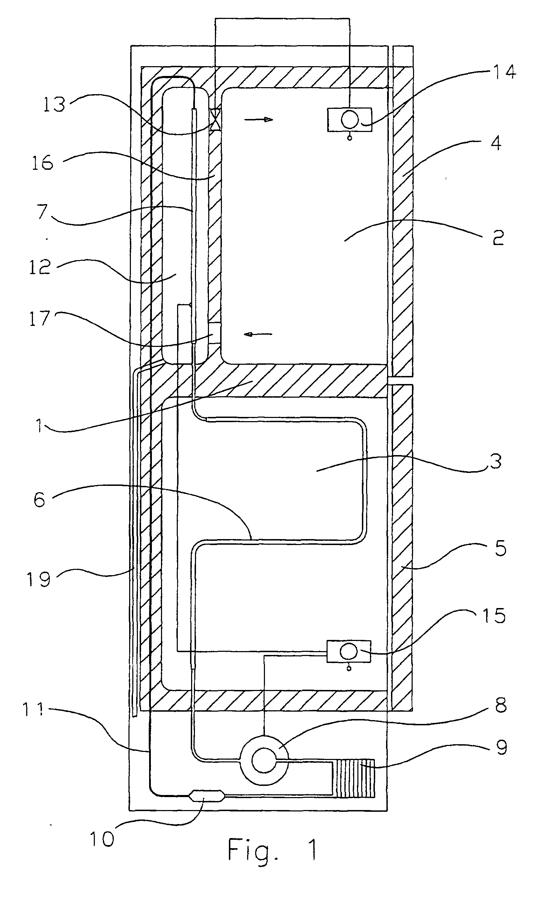

Figure 1 shows a refrigerating apparatus according to the invention comprising an insulated cabinet 1 provided with at least two separate compartments 2 and 3 for preservation of fresh food and frozen foodstuff, respectively. The first and second compartments 2 and 3, respectively are provided with relevant access doors 4 and 5.

The freezer compartment 3 has a static wire and tube evaporator 6 in the form of freezer shelves and the fresh food compartment has a tube on a plate fan cooled evaporator 7 connected in series with the freezer evaporator 6, which is connected in a refrigerating circuit also comprising a compressor 8, a condenser 9, a dehydrating filter 10 and a throttling element 11.

The fresh food compartment evaporator 7 is separated from the fresh food compartment 2 by an insulated enclosure 12 where a small fan 13 is mounted. The fan 13 is controlled by a thermostat 14 sensing the outgoing air from the evaporator enclosure 12. During compressor off cycles, the fan operates continuously and the above zero air from the fresh food compartment removes the frost taking advantage of the thermal inertia to cool the fresh food compartment 2. Defrost water is disposed of in a known way by collecting the defrost water and draining it to the outside of the cabinet where a pan on top of the compressor utilises compressor heat to evaporate the defrost water.

The freezer compartment thermostat 15 senses the air temperature in the freezer and controls the compressor on/off cycles. The thermostat 15 is preferably of the electronic type with a minimal difference between cut in and cut out temperatures. In addition, the thermostat 15 is programmed to stop the compressor 8 at predetermined intervals (6 hours or more) to ensure defrosting in the fresh food section 2 in case the compressor 8 operates continuously for an extended period of time. A second sensor on the thermostat 15 senses the temperature of the fresh food evaporator 7 and restarts the compressor 8 once the temperature is above 0°C and defrosting has taken place. The freezer section 3 is defrosted manually by normal cleaning of the freezer section 3.

The fan 13 in the fresh food compartment 2 is preferably of the direct current permanent magnet type consuming a only a minimum of energy and typically less than one watt.

The invention is particularly suitable for variable speed compressors operating at approx. 100% duty time at a low energy-consuming mode.

## Claims

1. A refrigerating apparatus comprising a cabinet (1) with
a first fresh food compartment (2) and a second freezer compartment (3) below said first compartment (2),
a single-stringed compressor refrigerating circuit (6-11) comprising
evaporators (6, 7) for cooling the first compartment (2) at a first temperature and the second compartment (3) at a lower second temperature, respectively, the temperature in each compartment being controlled by independent temperature control means (14, 15) in the first and second compartments (2, 3);
an enclosure (12) being arranged in connection with the first compartment (2), and the fresh food compartment evaporator (7) for refrigerating the first compartment (2) being housed in this enclosure (12), and ventilation means (13, 17) including a fan (13) and an opening (17) provided between the first compartment (2) and the enclosure (12),
said evaporators (6, 7) being arranged in series in the single compressor refrigerating circuit (6-11), said circuit (6-11) thereby being a one-stringed refrigerating circuit (6-11);
the enclosure (12) being a thermally insulated enclosure (12) separated from the first compartment by a thermally insulating wall (16)
the first temperature control means comprising a first thermostat (14) in the first compartment (2) sensing the outgoing air from the first evaporator (7) in the enclosure (12), said first thermostat (14) controlling the fan (13) by a signal switch of the first thermostat (14); said fan (13) being arranged in the upper part and the opening (17) in the lower part of the thermally insulated wall (16) between the first compartment (2) and the enclosure (12); and
the second temperature control means comprising a second thermostat (15) in the second compartment (3) adapted to sense both the air temperature in the second compartment (3) and the temperature of the fresh food compartment evaporator (7) in the enclosure (12) for controlling the compressor (8) of the single-stringed compressor refrigerating circuit; and
the second thermostat (15) being programmed to stop the compressor (8) at predetermined intervals to ensure defrosting in the enclosure (12) in connection with the first compartment (2), and wherein the enclosure (12) is provided with a defrost water collector means (19) for draining the defrost water to the outside of the cabinet (1).

2. A refrigerating apparatus according to claim 1, wherein the fan (13) is of a direct current permanent magnet type.

3. A refrigerating apparatus according to any of the previous claims, wherein the second thermostat (15) is of an electronic type having a minimum difference between cut in and cut out temperature.

4. A refrigerating apparatus according to any of the previous claims, wherein the compressor (8) is a variable speed compressor.

5. A refrigerating apparatus according to any of the previous claims, wherein the coolant of the refrigerating circuit is isobutane.

## Patentansprüche

1. Kühlgerät, das einen Schrank (1) aufweist mit:
einem ersten Fach (2) für frische Nahrungsmittel und einem zweiten Gefrierfach (3) unterhalb des ersten Fachs (2),
einem einsträngigen Verdichterkältekreislauf (6-11) der aufweist:
Verdampfer (6, 7) zum Kühlen des ersten Fachs (2) auf eine erste Temperatur bzw. des zweiten Fachs (3) auf eine niedrigere zweite Temperatur, wobei die Temperatur in jedem Fach durch unabhängige Temperatursteuermittel (14, 15) in dem ersten und zweiten Fach (2, 3) gesteuert wird;
wobei eine Einfassung (12) in Verbindung mit dem ersten Fach (2) angeordnet ist, und der Verdampfer (7) des Frischnahrungsmittelfachs zum Kühlen des ersten Fachs (2) in dieser Einfassung (12) untergebracht ist, und Lüftungsmittel (13, 17), die ein Gebläse (13) und eine Öffnung (17) einschließen, zwischen dem ersten Fach (2) und der Einfassung (12) vorgesehen sind,
wobei die Verdampfer (6, 7) in Reihe in dem einzelnen Verdichterkältekreislauf (6-11) angeordnet sind, und der Kreislauf (6-11) dadurch einen einsträngigen Kältekreislauf (6-11) darstellt;
wobei die Einfassung (12) eine wärmeisolierte Einfassung (12) darstellt, die von dem ersten Fach durch eine wärmeisolierende Wand (16) getrennt ist,
wobei das erste Temperatursteuermittel ein erstes Thermostat (14) in dem ersten Fach (2) aufweist, das die aus dem ersten Verdampfer (7) in der Einfassung (12) austretende Luft erfasst, und das erste Thermostat (14) das Gebläse (13) durch einen Signalschalter des ersten Thermostats (14) steuert; wobei das Gebläse (13) in dem oberen Teil und die Öffnung (17) in dem unteren Teil der wärmeisolierten Wand (16) zwischen dem ersten Fach (2) und der Einfassung (12) angeordnet ist; und
das zweite Temperatursteuermittel ein zweites Thermostat (15) in dem zweiten Fach (3) aufweist, das zum Erfassen sowohl der Lufttemperatur in dem zweiten Fach (3) als auch der Temperatur des Verdampfers (7) zum Kühlen frischer Nahrungsmittel in der Einfassung (12) zum Steuern des Verdichters (8) des einsträngigen Verdichterkältekreislaufs ausgelegt ist; und
das zweite Thermostat (15) programmiert ist, um den Verdichter(8) in vorbestimmten Intervallen anzuhalten, um Abtauen der Einfassung (12) in Verbindung mit dem ersten Fach (2) sicherzustellen, und wobei die Einfassung (12) mit einem Tauwasser-Sammelmittel (19) zum Ablassen des Tauwassers zur Außenseite des Schranks (1) versehen ist.

2. Kühlgerät nach Anspruch 1, bei dem das Gebläse (13) von einem Gleichstrom-Dauermagnettyp ist.

3. Kühlgerät nach einem der vorhergehenden Ansprüche, bei dem das zweite Thermostat (15) von einem elektronischen Typ mit einer minimalen Differenz zwischen Einschalt- und Ausschalttemperatur ist.

4. Kühlgerät nach einem der vorhergehenden Ansprüche, bei dem der Verdichter (8) ein geregelter Verdichter ist.

5. Kühlgerät nach einem der vorhergehenden Ansprüche, bei dem das Kühlmittel des Kältekreislaufs Isobutan darstellt.

## Revendications

1. Machine frigorifique comprenant une armoire (1) avec
un premier compartiment (2) pour aliments frais et un deuxième compartiment congélateur (3) sous ledit premier compartiment (2),
un circuit de réfrigération (6-11) à compresseur à une seule branche comprenant
des évaporateurs (6, 7) pour refroidir respectivement le premier compartiment (2) à une première température et le deuxième compartiment (3) à une deuxième température plus basse, la température dans chaque compartiment étant régulée par des moyens de régulation de température indépendants (14, 15) dans les premier et deuxième compartiments (2, 3) ;
un logement (12) étant aménagé en liaison avec le premier compartiment (2), et l'évaporateur (7) du compartiment pour aliments frais servant à réfrigérer le premier compartiment (2) étant logé dans ce logement (12), et des moyens de ventilation (13, 17) comprenant un ventilateur (13) et une ouverture (17) entre le premier compartiment (2) et le logement (12),
lesdits évaporateurs (6, 7) étant montés en série dans le circuit de réfrigération (6-11) à compresseur unique, ledit circuit (6-11) étant de ce fait un circuit de réfrigération (6-11) à une seule branche ;
le logement (12) étant un logement à isolation thermique (12) séparé du premier compartiment par une paroi d'isolation thermique (16) ;
le premier moyen de régulation de température comprenant, dans le premier compartiment (2) un premier thermostat (14) détectant l'air sortant du premier évaporateur (7) dans le logement (12), ledit premier thermostat (14) commandant le ventilateur (13) par un interrupteur à signal du premier thermostat (14), ledit ventilateur (13) étant disposé dans la partie supérieure et l'ouverture (17) dans la partie inférieure de la paroi d'isolation thermique (16) entre le premier compartiment (2) et le logement (12) ; et
le deuxième moyen de régulation de température comprenant, dans le deuxième compartiment (3) un deuxième thermostat (15) servant à détecter à la fois la température de l'air dans le deuxième compartiment (3) et la température de l'évaporateur (7) du compartiment pour aliments frais dans le logement (12) pour commander le compresseur (8) du circuit de réfrigération à compresseur à une seule branche ; et
le deuxième thermostat (15) étant programmé pour arrêter le compresseur (8) à intervalles prédéterminés afin d'assurer le dégivrage dans le logement (12) en liaison avec le premier compartiment (2), et le logement (12) étant pourvu d'un moyen de récupération (19) d'eau de dégivrage pour évacuer l'eau de dégivrage à l'extérieur de l'armoire (1).

2. Machine frigorifique selon la revendication 1, dans laquelle le ventilateur (13) est d'un type à aimant permanent à courant continu.

3. Machine frigorifique selon l'une quelconque des revendications précédentes, dans laquelle le deuxième thermostat (15) est d'un type électronique à différence minimale de température de fermeture et d'ouverture de circuit.

4. Machine frigorifique selon l'une quelconque des revendications précédentes, dans laquelle le compresseur (8) est un compresseur à vitesse variable.

5. Machine frigorifique selon l'une quelconque des revendications précédentes, dans laquelle le réfrigérant dans le circuit de réfrigération est de l'isobutane.
